(19) Europäisches Patentamt
European Patent Office
Office européen des brevets

(11) **EP 4 804 137 A1**

(12) **EUROPEAN PATENT APPLICATION**


(43) Date of publication:
**09.09.2026 Bulletin 2026/37**

(21) Application number: **25161557.1**

(22) Date of filing: **04.03.2025**

(51) International Patent Classification (IPC):
***G06V 10/74*** *(2022.01)* ***G06V 10/82*** *(2022.01)*
***G06V 20/40*** *(2022.01)* ***G06V 40/20*** *(2022.01)*

(52) Cooperative Patent Classification (CPC):
**G06V 20/41; G06V 10/761; G06V 10/82; G06V 20/44; G06V 20/49; G06V 40/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**



(71) Applicants:
- **TOYOTA JIDOSHA KABUSHIKI KAISHA**
**Toyota-shi, Aichi-ken, 471-8571 (JP)**
- **Rheinische Friedrich-Wilhelms-Universität Bonn**
**53113 Bonn (DE)**

(72) Inventors:
- **FRANCESCA, Gianpiero**
**1140 BRUSSELS (BE)**
- **BAHRAMI, Emad**
**53115 BONN (DE)**
- **GALL, Juergen**
**53115 BONN (DE)**

(74) Representative: **Cabinet Beau de Loménie**
**103, rue de Grenelle**
**75340 Paris Cedex 07 (FR)**


Remarks:
Amended claims in accordance with Rule 137(2) EPC.

(54) **A METHOD FOR TRAINING A MACHINE LEARNING MODEL TO SEGMENT PATTERNS IN A VISUAL SEQUENCE**


(57) A computer-implemented method for training a machine learning model ($\varepsilon_\theta$) to segment patterns in a visual sequence, the method comprising:
- providing a plurality of multi-view training sequences, each multi-view training sequence representing at least one of the patterns under at least two different views;
- calculating a loss function including at least one of a sequence loss term that measures similarity (10) between different views ( $f_i^q$, $f_i^r$ ) of one of the training sequences and an action loss term that measures similarity (20) between different fragments ( $s_{i,\alpha}^q$, $s_{j,\alpha}^r$ ) of the training sequences that represent a same one of the patterns; and
- updating the machine learning model ($\varepsilon_\theta$) based on the loss function.

$f_i^q$
$f_i^r$
$\mathcal{E}_\theta$
$\mathcal{E}_\theta$
$z_i^q$
$z_i^r$
$\mathcal{P}_\psi$
$p_i^q$
12
10
14
16


**FIG. 1**



Processed by Luminess, 75001 PARIS (FR)

## Description

BACKGROUND OF THE INVENTION

1. Field of the invention

The present disclosure relates to the field of machine learning and pattern segmentation, and more particularly to a method for training a machine learning model to segment patterns in a visual sequence. The method may find applications in all kinds of industries, including the automotive industry. For instance, the method may be used to train a machine learning model to understand a vehicle's environment in order to adequately control it, or to monitor and support human activities in places such as a factory.

2. Description of Related Art

Machine learning models, among other systems, may be trained to segment or localize patterns in a visual sequence, i.e. to analyze the visual sequence in order to detect which sub-ranges of the sequence include some patterns.

For instance, temporal action segmentation identifies action segments and their respective durations within inputs such as a video. This task has numerous practical applications, including assistive technologies, production line monitoring, and human or animal behavior analysis. While there has been major progress in temporal action segmentation, the generalization to unseen views has not been tackled. This poses additional challenges when such approaches are deployed in real environments. While it is possible to capture training data from multiple views, the camera setting used during data collection often does not cover the operation conditions since the environment and regulations often impose constraints about where cameras can be mounted. Re-collecting training data for a new camera view is often infeasible or economically impractical. While knowledge distillation techniques between two camera views can be used to minimize the annotation process for newly recorded data, it still requires recording new training data with the new and an old camera view.

Thus, there is a need for a new method that enables generalization of pattern segmentation to unseen views without acquisition of new data that is specific to the unseen views.

The following references disclose various methods relating to the field of pattern segmentation and to techniques used to perform such task:

[REF. 1] Bahrami, E., Francesca, G., Gall, J.: How much temporal long-term context is needed for action segmentation? In: IEEE International Conference on Computer Vision (ICCV) (2023).

[REF. 2] Abu Farha, Y., Gall, J.: MS-TCN: Multi-stage temporal convolutional network for action segmentation. In: IEEE Conference on Computer Vision and Pattern Recognition (CVPR) (2019).

[REF. 3] Oquab, M., Darcet, T., Moutakanni, T., Vo, H.V., Szafraniec, M., Khalidov, V., Fernandez, P., Haziza, D., Massa, F., El-Nouby, A., Howes, R., Huang, P.Y., Xu, H., Sharma, V., Li, S.W., Galuba, W., Rabbat, M., Assran, M., Ballas, N., Synnaeve, G., Misra, I., Jegou, H., Mairal, J., Labatut, P., Joulin, A., Bojanowski, P.: Dinov2: Learning robust visual features without supervision (2023).

SUMMARY

In this respect, the present disclosure relates to a computer-implemented method for training a machine learning model to segment patterns in a visual sequence, the method comprising:

- providing a plurality of multi-view training sequences, each multi-view training sequence representing at least one of the patterns under at least two different views;
- calculating a loss function including at least one of a sequence loss term that measures similarity between different views of one of the training sequences and an action loss term that measures similarity between different fragments of the training sequences that represent a same one of the patterns; and
- updating the machine learning model based on the loss function.

For the sake of conciseness, this method is referred to hereinafter as the training method.

A visual sequence is an ordered series of images along a temporal dimension. Due to the discrete nature of images, the sequence is necessarily temporally discontinuous; however, the sampling rate (i.e. the duration between two successive images) may be chosen as desired, and may be constant or not over the sequence.

The contents of the images are such that a plurality of images forms a pattern. The segmentation aims to determine which pattern is included in which (desirably continuous) series of the images. A continuous series associated to

one pattern is generally referred to as a segment.

A multi-view sequence represents at least one of the patterns, preferably a plurality of patterns, under at least two different views. Thus, more generally, a multi-view sequence is a visual sequence that comprises at least two views of the same content (e.g. the same one or more patterns). In other words, the multi-view sequence comprises a given content that is captured from at least two different viewpoints. A multi-view training sequence is a multi-view sequence that is used for training. Such sequence may be annotated with one or more, preferably all, patterns that occur therein.

A machine learning model may comprise one or more mathematical expressions configured to process the images in order to output information representative of the patterns. Weights of the machine learning model may be iteratively updated by the training method. The machine learning model may comprise one or more artificial neural network, without loss of generality. Each artificial neural network (ANN) is a computational model with one or more neurons, each neuron having a transfer function. The ANN therefore has a global transfer function that allows the calculation of at least one output as a function of at least one input. The neurons may be structured in one or more layers. The transfer functions of each neuron or the relative weights of the neurons in the network can be weighted by coefficients called synaptic weights (or simply weights) and biases. The weights can be modulated according to the training of the ANN. For instance, in supervised learning, training comprises providing the ANN with a set of situations in which inputs and outputs are known. During the training process, a loss function is calculated and the ANN adapts its synaptic weights and biases to conform to the learned situations (e.g. usually to minimize the value of the loss function), possibly with some tolerance. Eventually, the trained machine learning model should be able to temporally segment the patterns in a visual sequence, even from an unseen view, i.e. a view that is not available during training.

In the proposed training method, the loss function includes at least one of a sequence loss term and an action loss term.

The sequence loss term measures similarity between different views of one of the training sequences. The different views may represent one or more patterns. The different views may be selected within the same temporal segment of the training sequence. The views considered by the sequence loss term may be annotated or not. As the different views of a given multi-view training sequence represent the same content (e.g. the same patterns) by construction, these views should be treated similarly by the machine learning model. The sequence loss term ensures that the machine learning model learns such similarity and thus some consistency between various views of a same pattern (more precisely, various views of a same instance of a same pattern). For instance, the sequence loss term may take relatively small values when the different views are treated similarly by the machine learning model. Therefore, the sequence loss term enhances the capacity of the machine learning model to robustly identify a pattern irrespective of the view with which it is captured. In other words, the sequence loss term prompts the machine learning model to learn a temporal embedding where view information is as much as possible discarded. Yet in other words, the proposed sequence loss term aims to learn a sequence representation that is similar across views.

The action loss term measures similarity between different fragments of the training sequences that represent a same pattern. The fragments represent different instances of a same pattern, irrespective of whether they are extracted from a same training sequence (e.g. for a pattern occurring twice or more in that sequence) or from different training sequences. A fragment may be part or all of a segment. The action loss term ensures that the machine learning model learns the characteristic features of a pattern by leveraging the diversity shown over different instances of that pattern. For instance, the action loss term may take relatively small values when the different fragments are treated similarly by the machine learning model. Therefore, the action loss term enhances the capacity of the machine learning model to robustly identify a pattern irrespective of the irrelevant visual details of a particular instance. Yet in other words, the proposed action loss term aims to learn a pattern representation that is similar across views.

The proposed loss function, including at least one of a sequence loss term and an action loss term, enables to mitigate the influence of view differences during training. Thus, the proposed training method enables to robustly train a machine learning model to segment patterns in a visual sequence, even if the view submitted during testing has not been learnt during training.

Optionally, the loss function includes both the sequence loss term and the action loss term. The robustness of the machine learning model and its generalization capability on unseen views is further improved in this way, as both loss terms complement each other.

Optionally, the loss function includes a weighted sum of the sequence loss term having a first weight and the action loss term having a second weight, wherein a ratio of the first weight to the second weight lies in the range 1 to 5. In particular, the weight of the sequence loss term in the weighted sum (first weight) may be greater than the weight of the action loss term in the weighted sum (second weight). Such ratio provides an optimal balance between the sequence loss term and the action loss term. A greater second weight than in the proposed range results in a performance drop; on the other hand, a greater first weight than in the proposed range does not increase performance and is detrimental to balance between the two loss terms.

Optionally, the loss function further includes a pattern segmentation loss term. The pattern segmentation loss term may represent the machine learning model's ability to identify the correct pattern(s) in the visual sequence. For

instance, the frame-wise cross-entropy and a smoothing mean squared error loss may be used as the pattern segmentation loss term. In addition to the above-mentioned sequence and action loss terms, the pattern segmentation loss term enables not only to learn multi-view and multi-fragment consistency but also correct correspondences to the patterns to learn.

Optionally, calculating the sequence loss term comprises inputting the different views of one of the training sequences to respective instances of the machine learning model that share weights to obtain respective sequence embeddings, and computing a similarity between the sequence embeddings. The respective instances of the machine learning model that share weights may be regarded as so-called Siamese models (or Siamese networks, as the case may be).

Likewise but independently, optionally, calculating the action loss term comprises inputting the different fragments to respective instances of the machine learning model that share weights to obtain respective action embeddings, and computing a similarity between the action embeddings. The respective instances of the machine learning model that share weights may be regarded as so-called Siamese models (or Siamese networks, as the case may be).

Optionally, at least one of the embeddings is inputted to a predictor head before computing the similarity. The predictor head brings stability to the training method, during the iterative optimization process.

Optionally, a stopping gradient is applied to some instances of the machine learning model while calculating at least one of the sequence loss term and the action loss term. The stopping gradient prevents the update of some instances of the machine learning model during the training, in order to enable a meaningful comparison with the other instances that are updated. In particular, the stopping gradient prevents from collapsing towards a trivial solution such as a constant.

Optionally, the visual sequence comprises or is obtained from a video or a graph-based sequence. A video includes a sequence of frames, each frame corresponding to an image. A graph-based sequence is a sequence in which each frame includes a graph that is representative of visual data (e.g. a skeleton representing an animated being, e.g. a human, an animal or a robot).

The visual sequence may be obtained from a sensor, e.g. an imaging device such as a camera, or from a database, e.g. a local or distant server or the like. The visual sequence may be pre-processed (e.g. encoded or the like) before being used by the machine learning model and/or the training method.

The present disclosure further relates to a computer-implemented method for segmenting patterns in a visual sequence, comprising providing a machine learning model trained with the above-described training method, and inputting the visual sequence to the machine learning model, wherein the visual sequence comprises a view under which the machine learning model has not been trained. For conciseness, this method is referred to herein as the segmentation method.

The training method may have any of the features described above. As stated previously, thanks to that training method, the trained machine learning model can robustly segment patterns in unseen views (i.e. views under which the machine learning model has not been trained, in other words the visual sequence is captured from a viewpoint that has not been used during training of the machine learning model), even with challenging settings such as training on exocentric views (i.e. views external to the subject carrying out an action) and testing on egocentric views (i.e. views dependent on the subject carrying out the action).

The present disclosure further relates to a computer program set including instructions for executing the steps of the above-described training method or segmentation method when said program set is executed by at least one computer. This program set can use any programming language and take the form of source code, object code or a code intermediate between source code and object code, such as a partially compiled form, or any other desirable form.

The present disclosure further relates to a recording medium readable by at least one computer and having recorded thereon at least one computer program including instructions for executing the steps of the above-described training method or segmentation method. The recording medium can be any entity or device capable of storing the program. For example, the medium can include a mass memory device, such as hard drive. In general, mass memory devices suitable for tangibly embodying computer program instructions and data include all forms of non-volatile memory, including by way of example semiconductor memory devices, such as ROM, CD-ROM, EPROM, EEPROM, and flash memory devices; magnetic disks such as internal hard disks and removable disks; magneto-optical disks.

Alternatively, the recording medium can be an integrated circuit in which the program is incorporated, the circuit being adapted to execute the method in question or to be used in its execution.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

- FIG. 1 is a diagram illustrating the calculation of a sequence loss term within the proposed training method.
- FIG.2 is a diagram illustrating the calculation of an action loss term within the proposed training method.

DETAILED DESCRIPTION OF EMBODIMENTS

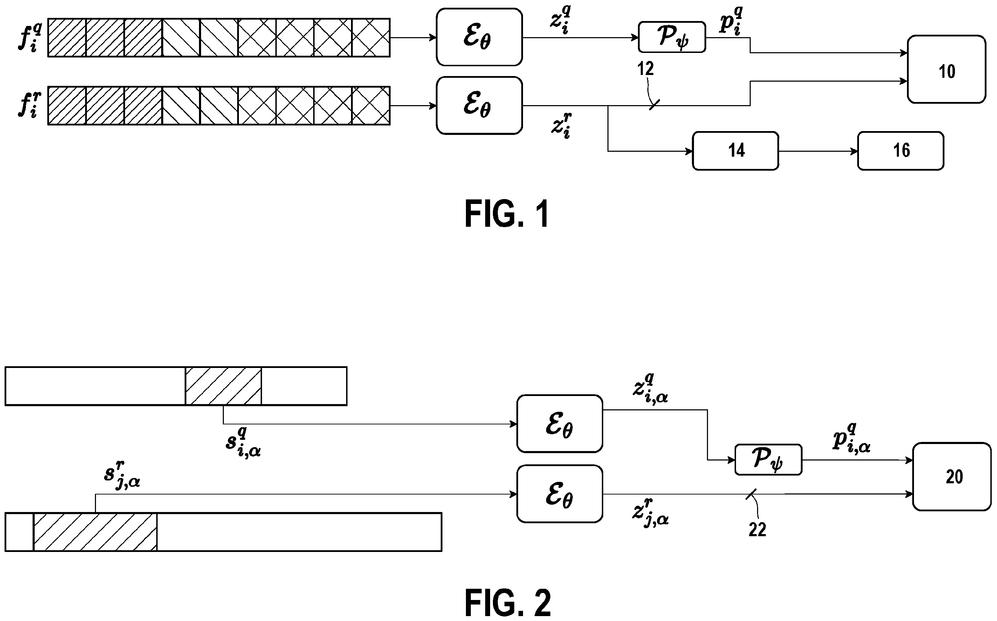

A training method according to an embodiment is described with reference to Figs. 1 and 2. Hereinafter, an embodiment of the training method focuses on an application to training a machine learning model to segment actions in a video, i.e. segment patterns in a visual sequence wherein each pattern corresponds to an action performed in the input signal which is a video or an output of a suitable video preprocessing. However, the principles explained herein can be generalized by the skilled person to other visual sequences than videos and/or other patterns than actions. For example, the visual sequence may comprise or be obtained from a graph-based sequence, e.g. where graphs are skeletons representing the bones (edges) and joints (vertices) of an animated body such as a human, an animal or a robot.

The general task of training a machine learning model to generalize action segmentation on unseen views can be formulated as follows. During training, a set of multi-view training sequences $\{\mathcal{I}_i\}_{i=1}^{N}$ is available, where each $\mathcal{I}_i = \{f_i^k\}_{k=1}^{M}$ represents the $i^{th}$ sequence recorded from $M$ distinct views denoted by $\mathcal{V}_{\text{seen}} = \{1,...,M\}$. It is assumed that $M \geq 2$. That is, each multi-view training sequence represents at least one action from at least two viewpoints. For each training sequence $\mathcal{I}_i$ with $T_i$ frames, the ground-truth actions, denoted by $c_i = [c_1, \ldots, c_{T_i}]$, are given. Thus, the training method is preferably a supervised training method.

For evaluation, videos $\mathcal{V}_{\text{unseen}}$ from different views can be provided, i.e. $\mathcal{V}_{\text{unseen}} \cap \mathcal{V}_{\text{seen}} = \emptyset$. Each video is represented by an $H$-dimensional input sequence $f \in R^{T \times H}$ with $T$ frames where $f_t$, $t \in \{1, ..., T\}$, is a feature vector of size $H$. That is, each visual sequence is obtained from a video, e.g. by a video feature encoder, e.g. a generic feature extractor that is adapted to the type of input.

A machine learning model (or model, for conciseness) for temporal action segmentation $\mathcal{E}_\theta$, e.g. a neural network, first encodes $f \in \mathbb{R}^{T \times H}$ into a representation $z \in \mathbb{R}^{T \times D}$. Then, a classification head may be used to predict the frame-wise labels $\hat{c} = [\hat{c}_1, \ldots, \hat{c}_T]$. As an example, the machine learning model may be the model described in [REF. 1].

Conventionally, the model for temporal action segmentation is trained and tested on the same views $\mathcal{V}_{\text{seen}}$. In contrast, the training method proposed herein relies on at least one loss term that increases the generalization to unseen views $\mathcal{V}_{\text{unseen}}$ without reducing the accuracy on seen views $\mathcal{V}_{\text{seen}}$, so that the model can be trained on some views and reliably used, at test time, on other views.

Specifically, the loss function includes at least one of a sequence loss term that measures similarity between different views of one of the training sequences and an action loss term that measures similarity between different fragments of the training sequences that represent a same one of the patterns.

The machine learning model can then be updated based on the calculated loss function, as is known per se in the art.

**Sequence loss term**

The sequence loss term aims to encourage the representations of all views of the same sequence to be similar. The principle of the sequence loss term is illustrated in Fig. 1.

Given an input sequence $f_i^q$ from view $q$, the training method may (e.g. randomly) sample $f_i^r$ from the same sequence i but a different view $r \neq q$. In other words, $f_i^q$ and $f_i^r$ are different views from a same training sequence. As shown in Fig. 1, these views have the same frame-wise labels, illustrated by corresponding hatchings.

The input sequences $f_i^q$ and $f_i^r$ are inputted into the model $\mathcal{E}_\theta$. Specifically, as shown in Fig. 1, the different views $f_i^q$ and $f_i^r$ are inputted into respective instances of the model $\mathcal{E}_\theta$ that share weights to obtain respective sequence embeddings $z_i^q$ and $z_i^r$. Similarity between the sequence embeddings $z_i^q$ and $z_i^r$ is then computed in order to calculate the sequence loss term.

In order to improve the accuracy on unseen views, a predictor head $\mathcal{P}_\psi$ may be provided to map one of the sequence embeddings $z_i^q$ to $p_i^q \in \mathbb{R}^{T \times D}$. For instance, the predictor head $\mathcal{P}_\psi$ may be a 3 layer multi-layer perceptron (MLP) or an attention block (e.g. from [REF. 1]) with non-linear activation such as Gaussian Error Linear Units (GELU)

activation. Similarity (shown at 10 in Fig. 1) may then be computed afterwards, between $p_i^q$ and $z_i^r$. For instance, cosine similarity, known per se in the art (see also below), may be used, however other appropriate functions may be used, such as Mean Squared Error (MSE) or a suitable distance. Besides, the sequences may be pooled before computing the similarity.

As regards the other one of the sequence embeddings, namely $z_i^r$, a stopping gradient 12 may be applied to the corresponding instance of the machine learning model $\mathcal{E}_\theta$, so that this instance is not updated by the training method. Stopping the update of one instance prevents the optimization of the loss function from collapsing towards trivial solutions. However, although the instances of the machine learning model are not updated simultaneously, the weights of the updated instance may then be replicated into the other instance to ensure that both instances still share weights.

For the sequence loss term, the training method then computes the frame-wise cosine similarity between

$$(p_i^q, z_i^r): \mathcal{S}(p_i^q, z_i^r) = \sum_t \mathcal{D}(p_{i,t}^q, z_{i,t}^r),$$

, where $\mathcal{D} = \frac{a \cdot b}{|a||b|}$ is the cosine similarity. The similarity is preferably computed frame-wise, as compared to pooling over the temporal dimension of the sequence, to yield greater performance.

The overall sequence loss term may finally be calculated in a symmetric way, e.g.:

$$\mathcal{L}_{seq} = -\sum_i \frac{1}{2}\left[\mathcal{S}(p_i^q, z_i^r) + \mathcal{S}(p_i^r, z_i^q)\right].$$

.

## Pattern segmentation loss term

Besides, for supervision, the loss function may further include a pattern segmentation loss term. For instance, it is proposed herein to add to one of the sequence embeddings $z_i^r$ a classification head 14 to predict the frame-wise labels $\hat{c} = [\hat{c}_1, \ldots, \hat{c}_T]$ and use a pattern segmentation loss term 16 (e.g. a temporal action segmentation loss (TAS)) denoted as $\mathcal{L}_{TAS}$. The pattern segmentation loss term $\mathcal{L}_{TAS}$ may comprise a frame-wise cross entropy loss and/or a smoothing mean squared error (MSE) loss as in [REF. 2].

## Action loss term

The sequence loss $\mathcal{L}_{seq}$ only considers views within the same sequence, thus it does not incorporate similarity across sequences. In order to leverage the plurality of training sequences available, an action loss term is introduced, that measures the similarity of action fragments, or even action segments, across views. The action loss term is illustrated in Fig. 2.

For the action loss term, the training method (e.g. randomly) samples an action segment $s_{i,\alpha}^q \in \mathbb{R}^{T_{s_i} \times H}$ from sequence *i*, where $\alpha$ denotes the action label of the segment and $T_{s_i}$ the number of frames of the segment. The training method samples (preferably uniformly) a second action segment $s_{j,\alpha}^r$ with the same action label $\alpha$, but a different view $r \neq q$. In this case, *j* may be the same or another sequence. In other words, $s_{i,\alpha}^q$ and $s_{j,\alpha}^r$ are different fragments of the training sequences that represent a same one of the patterns. The fragments may correspond to full action segments (e.g. the frames immediately before and after an action segment show different actions) or to a substantial part thereof, e.g. 50% or more of an action segment. With less than 50% of an action segment, the fragment may be too partial to correctly represent a given action.

As in the sequence loss term but independently, respective action embeddings $z_{i,\alpha}^q$ and $z_{j,\alpha}^r$ are obtained by inputting the different fragments $s_{i,\alpha}^q$ and $s_{j,\alpha}^r$ to respective instances of the machine learning model $\mathcal{E}_\theta$ that share weights. The above description and comments relating to the sequence loss term apply mutatis mutandis to the action loss term.

A predictor head $\mathcal{P}_\psi$ (here identical to the predictor head for the sequence loss term, but it may be a different predictor head) may be applied to one of the action embeddings to compute $p^q_{i,\alpha}$. Similarity (shown at 20 in Fig. 2) between $z^q_{i,\alpha}$ and $z^r_{j,\alpha}$, or preferably between $p^q_{i,\alpha}$ and $z^r_{j,\alpha}$, is then computed. For instance, cosine similarity may be used, e.g. given by

$$\mathcal{S}\left(p^q_{i,\alpha}, z^r_{j,\alpha}\right) = \sum_{t=1}^{\min\left(T_{s_i}, T_{s_j}\right)} \mathcal{D}\left(p^q_{i,\pi_i(t),\alpha}, z^r_{j,\pi_j(t),\alpha}\right)$$

where $\pi_i$ and $\pi_j$ are a temporal alignment between the segments $s^q_{i,\alpha}$ and $s^r_{j,\alpha}$, to account for the fact that these fragments may not have the same duration (the same number of frames). A linear alignment may be used, where $\pi(t) = t$ for the shortest segment and $\pi$ is a linear subsampling for the longest segment. Besides, the fragments may be pooled before computing the similarity.

The overall action loss term may finally be calculated in a symmetric way, e.g.: $\mathcal{L}_{action} = -\sum_i \frac{1}{2}\left[\mathcal{S}\left(p^q_{i,\alpha}, z^r_{j,\alpha}\right) + \mathcal{S}\left(p^r_{j,\alpha}, z^q_{i,\alpha}\right)\right]$.

As regards the other one of the sequence embeddings, namely $z^r_i$, a stopping gradient 22 may be applied to the corresponding instance of the machine learning model $\mathcal{E}_\theta$

The loss function used by the training method may include both the sequence loss term and the action loss term. Experiments conducted by the inventors show that both loss terms complement each other: while the action loss term aims that the representation of actions across sequences and views be similar, the sequence loss term makes a frame-by-frame comparison of different views of the same sequence. While the latter can also include frames that have not been annotated, the action loss is limited to annotated action segments.

Desirably, the loss function $\mathcal{L}$ includes a weighted sum of the sequence loss term $\mathcal{L}_{seq}$ having a first weight $\lambda$ and the action loss term $\mathcal{L}_{action}$ having a second weight $\beta$. For instance, the loss function $\mathcal{L}$ is defined as $\mathcal{L} = \mathcal{L}_{TAS} + \lambda\mathcal{L}_{seq} + \beta\mathcal{L}_{action}$.

As mentioned above, $\mathcal{L}_{TAS}$ is a pattern segmentation loss term such as the action segmentation loss from [REF. 2]. The impact of the sequence loss and the action loss are steered by $\lambda$ and $\beta$, respectively. In embodiments, a ratio of the first weight to the second weight $\lambda/\beta$ lies in the range 1 to 5. The weights may be chosen between 0 and 1. For instance, optimal values for $\lambda$ and $\beta$ are between 0.4-0.6 and between 0.1-0.3, respectively, e.g. 0.5 and 0.2 respectively.

The machine learning model for action segmentation $\mathcal{E}_\theta$ and the predictor head $\mathcal{P}_\psi$ may be trained jointly using the loss function $\mathcal{L}$.

Experiments have been conducted by the inventors with a machine learning model trained on public datasets with the above-described training method. Then, the model was used to segment actions in visual sequences comprising a view under which the machine learning model had not been trained. Inputs of the machine learning model (i.e. the visual sequences) may be pre-processed, e.g. by a generic feature extractor such as self-supervised DinoV2 [REF. 3] with or without fine-tuning. However, other feature encoders may be used, that are adapted to the type of visual sequence to process. Yet in other embodiments, the above presented machine learning model $\mathcal{E}_\theta$ may encode the basic inputs (e.g. videos, RGB image sequences or other raw visual signals) itself instead of taking pre-processed (e.g. encoded) features as inputs.

As compared to a baseline without the proposed sequence loss term and action loss term, adding either the sequence loss term or the action loss term leads to improvements while the best results are achieved by combining both loss terms. While this applies to both unseen egocentric and exocentric views, the improvement in unseen egocentric views is more pronounced than in unseen exocentric views. This difference may be attributed to the substantial dissimilarity between egocentric views (which are generally available for training) and exocentric views, leading to a greater benefit from using the two loss terms for egocentric views. Furthermore, the results for seen views also show

improvement, potentially due to the regularization effect of additional loss terms. Qualitatively, the predictions of the machine learning model trained with the proposed training method demonstrate better quality in terms of the order and length of predicted action segments.

Naturally, the diversity of the training views has an impact on the performance of the trained model: the more diverse the viewpoints and patterns are, the better the model will be able to generalize the learned patterns.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

**1.** A computer-implemented method for training a machine learning model ( $\mathcal{E}_\theta$ ) to segment patterns in a visual sequence, the method comprising:

- providing a plurality of multi-view training sequences, each multi-view training sequence representing at least one of the patterns under at least two different views;
- calculating a loss function including at least one of a sequence loss term that measures similarity (10) between different views ( $f_i^q,\ f_i^r$ ) of one of the training sequences and an action loss term that measures similarity (20) between different fragments ( $s_{i,\alpha}^q,\ s_{j,\alpha}^r$ ) of the training sequences that represent a same one of the patterns; and
- updating the machine learning model ( $\mathcal{E}_\theta$ ) based on the loss function.

**2.** The method of claim 1, wherein the loss function includes both the sequence loss term and the action loss term.

**3.** The method of claim 1, wherein the loss function includes a weighted sum of the sequence loss term having a first weight and the action loss term having a second weight, wherein a ratio of the first weight to the second weight lies in the range 1 to 5.

**4.** The method of any one of claims 1 to 3, wherein the loss function further includes a pattern segmentation loss term (16).

**5.** The method of any one of claims 1 to 4, wherein calculating the sequence loss term comprises inputting the different views ( $f_i^q,\ f_i^r$ ) of one of the training sequences to respective instances of the machine learning model that share weights to obtain respective sequence embeddings ( $z_i^q,\ z_i^r$ ), and computing a similarity between the sequence embeddings ( $z_i^q, z_i^r$ ).

**6.** The method of any one of claims 1 to 5, wherein calculating the action loss term comprises inputting the different fragments ( $s_{i,\alpha}^q,\ s_{j,\alpha}^r$ ) to respective instances of the machine learning model that share weights to obtain respective action embeddings ( $z_{i,\alpha}^q,\ z_{j,\alpha}^r$ ), and computing a similarity between the action embeddings ( $z_{i,\alpha}^q, z_{j,\alpha}^r$ ).

**7.** The method of claim 5 or 6, wherein at least one of the embeddings is inputted to a predictor head ( $\mathcal{P}_\psi$ ) before computing the similarity.

**8.** The method of any one of claims 5 to 7, wherein a stopping gradient (12, 22) is applied to some instances of the machine learning model while calculating at least one of the sequence loss term and the action loss term.

**9.** The method of any one of claims 1 to 8, wherein the visual sequence comprises or is obtained from a video or a graph-based sequence.

**10.** A computer-implemented method for segmenting patterns in a visual sequence, comprising providing a machine learning model trained with the method of any one of claims 1 to 9, and inputting the visual sequence to the machine learning model, wherein the visual sequence comprises a view under which the machine learning model has not been trained.

**11.** A computer program set including instructions for executing the steps of the method of any one of claims 1 to 10 when said program set is executed by at least one computer.

**12.** A recording medium readable by at least one computer and having recorded thereon at least one computer program including instructions for executing the steps of the method of any one of claims 1 to 10.

**Amended claims in accordance with Rule 137(2) EPC.**

**1.** A computer-implemented method for training a machine learning model ($\varepsilon_\theta$) to segment patterns in a visual sequence, the method comprising:

- providing a plurality of multi-view training sequences, each multi-view training sequence representing at least one of the patterns under at least two different views captured from at least two different viewpoints;
- calculating a loss function including a sequence loss term that measures similarity (10) between different views ( $f_i^q$, $f_i^r$ ) of one of the training sequences and an action loss term that measures similarity (20) between different fragments ( $s_{i,\alpha}^q$, $s_{j,\alpha}^r$ ) of the training sequences that represent different instances of a same one of the patterns; and
- updating the machine learning model ($\varepsilon_\theta$) based on the loss function.

**2.** The method of claim 1, wherein the loss function includes a weighted sum of the sequence loss term having a first weight and the action loss term having a second weight, wherein a ratio of the first weight to the second weight lies in the range 1 to 5.

**3.** The method of any one of claims 1 to 2, wherein the loss function further includes a pattern segmentation loss term (16).

**4.** The method of any one of claims 1 to 3, wherein calculating the sequence loss term comprises inputting the different views ( $f_i^q$, $f_i^r$ ) of one of the training sequences to respective instances of the machine learning model that share weights to obtain respective sequence embeddings ( $z_i^q$, $z_i^r$ ), and computing a similarity between the sequence embeddings ( $z_i^q$, $z_i^r$ ).

**5.** The method of any one of claims 1 to 4, wherein calculating the action loss term comprises inputting the different fragments ( $s_{i,\alpha}^q$, $s_{j,\alpha}^r$ ) to respective instances of the machine learning model that share weights to obtain respective action embeddings ( $z_{i,\alpha}^q$, $z_{j,\alpha}^r$ ), and computing a similarity between the action embeddings ( $z_{i,\alpha}^q$, $z_{j,\alpha}^r$ ).

**6.** The method of claim 4 or 5, wherein at least one of the embeddings is inputted to a predictor head ($\mathcal{P}_\psi$) before computing the similarity.

**7.** The method of any one of claims 4 to 6, wherein a stopping gradient (12, 22) is applied to some instances of the machine learning model while calculating at least one of the sequence loss term and the action loss term.

**8.** The method of any one of claims 1 to 7, wherein the visual sequence comprises or is obtained from a video or a graph-based sequence.

**9.** A computer-implemented method for segmenting patterns in a visual sequence, comprising providing a machine learning model trained with the method of any one of claims 1 to 8, and inputting the visual sequence to the machine learning model, wherein the visual sequence comprises a view under which the machine learning model has not been

trained.

10. A computer program set including instructions for executing the steps of the method of any one of claims 1 to 9 when said program set is executed by at least one computer.

11. A recording medium readable by at least one computer and having recorded thereon at least one computer program including instructions for executing the steps of the method of any one of claims 1 to 9.

$f_i^q$
$f_i^r$
$\mathcal{E}_\theta$
$\mathcal{E}_\theta$
$z_i^q$
$z_i^r$
$\mathcal{P}_\psi$
$p_i^q$
12
10
14
16
$s_{i,\alpha}^q$
$s_{j,\alpha}^r$
$\mathcal{E}_\theta$
$\mathcal{E}_\theta$
$z_{i,\alpha}^q$
$z_{j,\alpha}^r$
$\mathcal{P}_\psi$
$p_{i,\alpha}^q$
22
20


FIG. 1

FIG. 2

Europäisches Patentamt
European Patent Office
Office européen des brevets

# EUROPEAN SEARCH REPORT

Application Number
EP 25 16 1557

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAOFEI KUANG ET AL: "Video Contrastive Learning with Global Context", ARXIV.ORG, CORNELL UNIVERSITY LIBRARY, 201 OLIN LIBRARY CORNELL UNIVERSITY ITHACA, NY 14853, 5 August 2021 (2021-08-05), XP091030135, * the whole document * ----- | 1-12 | INV. G06V10/74 G06V10/82 G06V20/40 G06V40/20 |
| X | TIAN YONGLONG ET AL: "Contrastive Multiview Coding", 1 June 2022 (2022-06-01), SPRINGER, PAGE(S) 776 - 794, XP047571153, * the whole document * ----- | 1-3,5,6, 8-12 | |
| X | YALE SONG ET AL: "Multi-view latent variable discriminative models for action recognition", COMPUTER VISION AND PATTERN RECOGNITION (CVPR), 2012 IEEE CONFERENCE ON, IEEE, 16 June 2012 (2012-06-16), pages 2120-2127, XP032232317, DOI: 10.1109/CVPR.2012.6247918 ISBN: 978-1-4673-1226-4 * the whole document * ----- | 1,8-12 | TECHNICAL FIELDS SEARCHED (IPC) |
| | | | G06V |
| X | CAMILLO QUATTROCCHI ET AL: "Synchronization is All You Need: Exocentric-to-Egocentric Transfer for Temporal Action Segmentation with Unlabeled Synchronized Video Pairs", ARXIV.ORG, CORNELL UNIVERSITY LIBRARY, 201 OLIN LIBRARY CORNELL UNIVERSITY ITHACA, NY 14853, 14 March 2024 (2024-03-14), XP091696109, * the whole document * ----- | 1-3,5,6, 8-12 | |

-/--

The present search report has been drawn up for all claims

| Place of search | Date of completion of the search | Examiner |
|---|---|---|
| The Hague | 17 June 2025 | Rajadell Rojas, Olga |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EUROPEAN SEARCH REPORT

Application Number
EP 25 16 1557

| Category | Citation of document with indication, where appropriate, of relevant passages | Relevant to claim | CLASSIFICATION OF THE APPLICATION (IPC) |
|---|---|---|---|
| X | CHEN MINGHAO ET AL: "Frame-wise Action Representations for Long Videos via Sequence Contrastive Learning", 2022 IEEE/CVF CONFERENCE ON COMPUTER VISION AND PATTERN RECOGNITION (CVPR), IEEE, 18 June 2022 (2022-06-18), pages 13791-13800, XP034194046, DOI: 10.1109/CVPR52688.2022.01343 [retrieved on 2022-09-27] * the whole document * | 1-3,5,6, 8-12 | |
| X | SHAH KETUL ET AL: "Multi-View Action Recognition using Contrastive Learning", 2023 IEEE/CVF WINTER CONFERENCE ON APPLICATIONS OF COMPUTER VISION (WACV), IEEE, 2 January 2023 (2023-01-02), pages 3370-3380, XP034290730, DOI: 10.1109/WACV56688.2023.00338 [retrieved on 2023-02-06] * the whole document * | 1,8-12 | TECHNICAL FIELDS SEARCHED (IPC) |

The present search report has been drawn up for all claims

1

| Place of search | Date of completion of the search | Examiner |
|---|---|---|
| The Hague | 17 June 2025 | Rajadell Rojas, Olga |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **BAHRAMI, E.** ; **FRANCESCA, G.** ; **GALL, J.** How much temporal long-term context is needed for action segmentation. *IEEE International Conference on Computer Vision (ICCV)*, 2023
- **ABU FARHA, Y.** ; **GALL, J.** MS-TCN: Multi-stage temporal convolutional network for action segmentation. *IEEE Conference on Computer Vision and Pattern Recognition (CVPR)*, 2019
- **OQUAB, M.** ; **DARCET, T.** ; **MOUTAKANNI, T.** ; **VO, H.V.** ; **SZAFRANIEC, M.** ; **KHALIDOV, V.** ; **FERNANDEZ, P.** ; **HAZIZA, D.** ; **MASSA, F.** ; **EL-NOUBY, A.** *Dinov2: Learning robust visual features without supervision*, 2023